(19) Europäisches Patentamt
European Patent Office
Office européen des brevets

(11) **EP 4 723 182 A1**

(12) **EUROPEAN PATENT APPLICATION**
published in accordance with Art. 153(4) EPC

(43) Date of publication:
**08.04.2026 Bulletin 2026/15**

(21) Application number: **24913505.4**

(22) Date of filing: **23.12.2024**

(51) International Patent Classification (IPC):
**H01M 4/04** *(2006.01)*   **H01F 7/02** *(2006.01)*

(52) Cooperative Patent Classification (CPC):
**H01F 7/02; H01M 4/04;** Y02E 60/10

(86) International application number:
**PCT/KR2024/020933**

(87) International publication number:
**WO 2025/143712 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.12.2023 KR 20230196666**

(71) Applicant: **LG Energy Solution, Ltd.**
**Seoul 07335 (KR)**

(72) Inventors:
• **YOON, Jong Su**
**Daejeon 34122 (KR)**
• **LEE, Taek Soo**
**Daejeon 34122 (KR)**
• **KIM, Man Hyeong**
**Daejeon 34122 (KR)**

(74) Representative: **Plasseraud IP**
**104 Rue de Richelieu**
**CS92104**
**75080 Paris Cedex 02 (FR)**

(54) **MAGNETIC ALIGNMENT APPARATUS AND MAGNETIC ALIGNMENT METHOD OF ELECTRODE ACTIVE MATERIAL IN ELECTRODE USING SAME**

(57)    The present disclosure relates to a magnetic alignment device and a method of magnetic alignment of electrode active material in electrode using the same. The magnetic alignment device has a structure that controls the directionality of the N poles and S poles of each of a plurality of unit magnets included in a first magnetic portion and a second magnetic portion to magnetize magnetic members positioned between the unit magnets, and applies a magnetic field to electrode slurry through the magnetized magnetic members. Therefore, the magnetic alignment device can perform magnetic alignment of electrode active material in an electrode with high efficiency during manufacturing of electrodes for lithium secondary batteries. In addition, as the magnetic alignment device can easily control the application of a magnetic field depending on the magnetization of the magnetic members, it has the advantages of excellent workability and high economic efficiency in electrode manufacturing.

【FIG. 3】

**Description**

[Technical Field]

The present disclosure relates to a magnetic alignment device capable of controlling the application of a magnetic field and a method of magnetic alignment of electrode active material in electrode using the same.

This application claims the benefit of priority from Korean Patent Application No. 10-2023-0196666, filed on December 29, 2023, the entire contents disclosed therein are incorporated by reference into this disclosure.

[Background]

Recently, secondary batteries have been widely applied not only to small devices such as portable electronic devices, but also to medium and large-sized devices such as battery packs for hybrid vehicles or electric vehicles, or power storage devices.

Such a secondary battery refers to a chargeable and dischargeable power generation element comprising a stacked structure of a positive electrode/separator/negative electrode. Generally, the positive electrode includes a lithium metal oxide as a positive electrode active material, and the negative electrode includes a carbon-based negative electrode active material such as graphite, etc. During charging, lithium ions released from the positive electrode are intercalated into the carbon-based negative electrode active material, and during discharging, lithium ions contained in the carbon-based negative electrode active material are intercalated into the lithium metal oxide of the positive electrode, having a structure that allows repeated charging and discharging.

Among these, graphite materials such as natural graphite can be used as a negative electrode active material for the negative electrode. Such graphite has a layered structure formed by stacking a number of layers where carbon atoms spread in a planar form creating a network structure. During charging, lithium ions enter from the edge surface (the surface where the layers overlap) of such graphite layers and diffuse between the layers. During discharging, lithium ions can be deintercalated and be released from the edge surface of the layers. Accordingly, since graphite has lower electrical resistivity in the surface direction of the layers compared to the stacking direction, a conduction path of diverted electrons is formed along the surface direction of the layer.

In conventional lithium secondary batteries using graphite, a technology has been proposed to magnetically align the graphite contained in the negative electrode to improve the charging performance of the negative electrode. Specifically, it has a configuration in which the (002) crystal surface of graphite is aligned to be almost perpendicular to the electrode current collector in a magnetic field, when forming a negative electrode, and is fixed therein. In this case, the edge surface of the graphite layers faces the positive electrode active layer, enabling smooth intercalation and deintercalation of lithium ions while shortening the electron conduction path, which can improve the electronic conductivity of the negative electrode, thereby enhancing the charging performance of the battery.

Such alignment of graphite can be induced by applying a magnetic field to the not-dried electrode slurry, and the magnetic field can be implemented by arranging magnets on the surface of the electrode current collector coated with the electrode slurry. However, while electromagnets or permanent magnets can be applied as the magnets, electromagnets require a considerable amount of energy to orient the graphite, resulting in low economic efficiency. Thus, for economic reasons, magnetic alignment devices including permanent magnets are often mounted in negative electrode manufacturing facilities. However, general negative electrode manufacturing facilities are designed to produce various models of negative electrodes with different specifications, and when a magnetic alignment device containing permanent magnets is introduced into the negative electrode manufacturing facility, the specifications of negative electrodes that can be manufactured with that facility are considerably limited due to the magnetic force of the permanent magnets included in the magnetic alignment device.

In response, attempts have been made to shield the magnetic force implemented by the permanent magnets of the magnetic alignment device when necessary, by using a magnetic shield or the like. In this case, there is the inconvenience of mounting and/or removing the magnetic shield to the magnetic alignment device during the process, which lowers productivity. Moreover, to completely shield the magnetic force of the permanent magnets included in the magnetic alignment magnet, the thickness of magnetic shield should be significantly increased, making the equipment structure complex and maintenance difficult.

Therefore, there is a demand for the development of technology that can provide a magnetic alignment device for magnetic field alignment of electrode active material in the electrode while allowing the magnetic field of the magnetic alignment device to be turned on/off according to the specifications of the electrode being manufactured.

[Related Art Document]

Korean Patent Application Publication No. 10-2019-0049803

# EP 4 723 182 A1

[Summary]

[Technical Problem]

An object of the present disclosure is to provide a magnetic alignment device and a method of magnetic alignment using the same, which includes a magnet for magnetic alignment of electrode active material in an electrode for lithium secondary battery, and which can easily control the application of a magnetic field as needed.

[Technical Solution]

To solve the problem described above,
the present disclosure provides a magnetic alignment device comprising:

a first magnetic portion and a second magnetic portion positioned at an upper portion and a lower portion, respectively, based on a surface of an electrode current collector coated with electrode slurry along a transfer direction of the electrode current collector to apply a magnetic force,
wherein the first magnetic portion and the second magnetic portion each have a structure in which n unit magnets and n-1 magnetic members are alternately arranged in a width direction of the electrode current collector (where n is an integer from 2 to 20),
wherein each unit magnet has an N pole and an S pole, and is arranged such that poles of the same polarity of adjacent unit magnets face each other when a magnetic field is applied, and
wherein the magnetic member is magnetized to a different polarity from the adjacent unit magnets.

In this case, the magnetic member of the first magnetic portion can be magnetized to a different polarity from the magnetic member of the opposing second magnetic portion when a magnetic field is applied.
In addition, each of the n unit magnets includes a rotation axis at a boundary between the N pole and the S pole, and each rotation axis can rotate in the same direction such that the N pole or the S pole of the unit magnet faces the electrode current collector when no magnetic field is applied.
The first magnetic portion and the second magnetic portion may include a base frame providing space for the n unit magnets and n-1 magnetic members included in each magnetic portion to be positioned at an upper portion and a lower portion of the transferred electrode current collector, a fixing guide supported by the base frame to fix the n-1 magnetic members, and a rotation unit supported by the base frame to rotate the rotation axes included in the n unit magnets.
Meanwhile, the magnetic member may have a total length in the width direction of the electrode current collector in a ratio in the range of 101% to 200% of a width of the electrode slurry.
In addition, the first magnetic portion and the second magnetic portion may have a separation distance in the range of 10 mm to 1,000 mm.
Moreover, the magnetic field strength of the unit magnet may be in the range of 2,000G to 8,000G.
In addition, the magnetic member may comprise a ferromagnetic material including one or more of iron, nickel, cobalt, and chromium.
Moreover, the unit magnet may comprise a permanent magnet.
Furthermore, the present disclosure provides a method of magnetic alignment of electrode active material in an electrode comprising:

applying a magnetic field to electrode slurry coated on an electrode current collector using a first magnetic portion and a second magnetic portion positioned at an upper portion and a lower portion, respectively, based on the surface of the electrode current collector,
wherein the first magnetic portion and the second magnetic portion each have a structure in which n unit magnets and n-1 magnetic members are alternately arranged in a width direction of the electrode current collector (where n is an integer from 2 to 20),
wherein each unit magnet has an N pole and an S pole, and is controlled such that poles of the same polarity of adjacent unit magnets face each other when a magnetic field is applied.

Here, the magnetic member of the first magnetic portion can be magnetized to a different polarity from the magnetic member of the opposing second magnetic portion when a magnetic field is applied.
In addition, each of the n unit magnets includes a rotation axis at a boundary between the N pole and the S pole, and can rotate in the same direction such that the N pole or the S pole of the unit magnet faces the electrode current collector when no magnetic field is applied.

Moreover, the first magnetic portion and the second magnetic portion may be separated such that a magnetic field strength of the magnetic member represented by the following Equation 1 is greater than a magnetic field strength of the unit magnet when a magnetic field is applied:

$$[\text{Equation 1}]$$

$$y=-a \cdot \ln(x)+b$$

(In Equation 1, x represents a separation distance between the first magnetic portion and the second magnetic portion (unit: mm),
y represents the magnetic field strength of the magnetic member when a magnetic field is applied (unit: G), and
a and b satisfy $5600 \leq a \leq 6000$ and $26000 \leq b \leq 30000$).

[Advantageous Effects]

The magnetic alignment device according to the present disclosure can perform magnetic alignment of an electrode active material in an electrode with high efficiency during electrode manufacturing. In addition, since the magnetic alignment device can easily control the application of a magnetic field depending on the magnetization of the magnetic member, it has the advantages of excellent workability and high economic efficiency in electrode manufacturing.
Moreover, the magnetic alignment method using the magnetic alignment device can selectively apply a magnetic field in predetermined sections along the transfer direction of the electrode current collector during electrode manufacturing, and thus, electrodes of various performances and specifications can be manufactured.

[Brief Description of the Drawings]

FIG. 1 is a structural diagram schematically illustrating an electrode manufacturing device.
FIG. 2 is a cross-sectional view schematically illustrating a structure of a magnetic alignment device applied to a conventional electrode manufacturing device.
FIG. 3 is a cross-sectional view of a magnetic alignment device according to the present disclosure cut in a width direction (y direction) of an electrode current collector (or an electrode sheet) upon application of a magnetic field.
FIG. 4 is a perspective view schematically illustrating a structure of the magnetic alignment device according to the present disclosure.
FIG. 5 is a cross-sectional view illustrating a disposition state of unit magnets and magnetic members provided in a first magnetic portion and a second magnetic portion in the width direction (y direction) of an electrode current collector when a magnetic field is applied according to the magnetic alignment device according to the present disclosure.
FIG. 6 is a cross-sectional view illustrating a disposition state of unit magnets and magnetic members provided in a first magnetic portion and a second magnetic portion in the width direction (y direction) of an electrode current collector when no magnetic field is applied according to the magnetic alignment device according to the present disclosure.

[Detailed Description]

The present disclosure may have various modifications and various embodiments, and specific embodiments will be described in detail in the following detailed description.
However, it should be understood that the present disclosure is not limited to the specific embodiments, and includes all modifications, equivalents, or alternatives within the spirit and technical scope of the present disclosure.
The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.
Hereinafter, the present disclosure will be described in more detail.

**Magnetic alignment device**

The present disclosure provides a magnetic alignment device comprising:

a first magnetic portion and a second magnetic portion positioned at an upper portion and a lower portion, respectively, along a transfer direction of an electrode current collector coated with electrode slurry to apply a magnetic force, wherein the first magnetic portion and the second magnetic portion each have a structure in which n unit magnets and n-1 magnetic members are alternately arranged in a width direction of the electrode current collector (where n is an integer from 2 to 20),

wherein each unit magnet has an N pole and an S pole, and is arranged such that poles of the same polarity of adjacent unit magnets face each other when a magnetic field is applied, and

wherein the magnetic member is magnetized to a different polarity from the adjacent unit magnets.

The magnetic alignment device according to the present disclosure refers to a device applied during the manufacturing of electrodes for use in lithium secondary batteries.

The magnetic alignment device can align the crystal surface of the electrode active material contained in the electrode slurry at a large angle close to perpendicular to the electrode current collector by applying a magnetic field to the electrode slurry coated on the surface of the electrode sheet, specifically on the surface of the electrode current collector. For this, the magnetic alignment device is equipped with a magnetic portion for applying a magnetic field to the carbon-based negative electrode active material included in the electrode slurry.

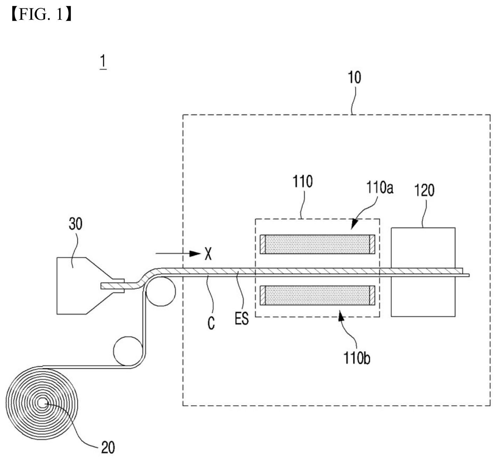

Specifically, FIG. 1 is a structural diagram schematically illustrating an electrode manufacturing device 1 including a magnetic alignment device 10. Referring to FIG. 1, the magnetic alignment device 10 has a structure including: a magnetic portion 110 that applies a magnetic field to an upper portion and a lower portion of the electrode current collector C along the transfer direction (x-axis direction) of the electrode current collector; and a drying part 120 that dries the electrode slurry of the electrode current collector to which the magnetic field is applied by the magnetic portion 110.

The magnetic portion 110 is arranged at an upper portion and a lower portion of the electrode sheet being transferred, performing the role of applying a magnetic field to each surface of the electrode sheet. At this time, the magnetic portion 110 includes a first magnetic portion 110a and a second magnetic portion 110b arranged at the upper portion and the lower portion of the electrode sheet, respectively, so that the magnetic field is uniformly applied to the side where the electrode slurry ES is exposed (in other words, the upper surface) and the side where the current collector C is exposed (in other words, the lower surface) when the magnetic field is applied to the electrode slurry ES coated on the electrode current collector C.

At this time, the first magnetic portion 110a and the second magnetic portion 110b have magnetic polarities different from each other so that the direction of magnetic field lines between them is perpendicular to the surface of each magnetic portion, thereby performing the function of inducing magnetic alignment of the electrode active material included in the electrode slurry by applying a magnetic field to the transferred electrode slurry ES.

The first magnetic portion 110a and the second magnetic portion 110b include a plurality of unit magnets and a plurality of magnetic members that are magnetized by these unit magnets. The polarity arrangement of the unit magnets included in each magnetic portion is adjusted so that poles of the same polarity face each other in adjacent unit magnets, resulting in simultaneous magnetic field concentration due to reinforcement of magnetic field lines and reverse magnetic fields due to cancellation. Accordingly, instead of directly applying a magnetic field to each surface of the electrode sheet, these unit magnets can function to transfer an enhanced magnetic field to the magnetic members. The magnetic members provided between them can collect the reinforced magnetic field and apply it to the electrode sheet surface. The magnetic alignment device according to the present disclosure has the technical feature of adjusting whether a magnetic field is applied without moving each magnetic portion or requiring additional equipment by applying a magnetic field to the electrode sheet through the magnetic members.

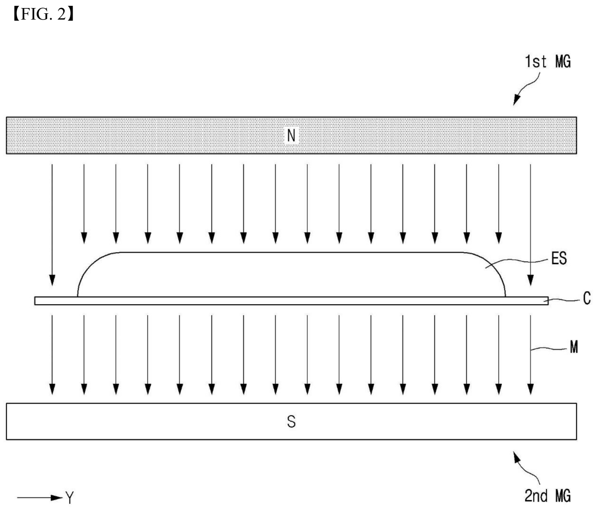

Specifically, as shown in FIG. 2, the magnetic portion of a conventional magnetic alignment device has a structure in which a pair of permanent magnets having a single polarity are arranged at an upper portion and a lower portion of the transferred electrode sheet, in other words, the electrode current collector C and the electrode slurry ES coated on the current collector, with different polarities. The electrode sheet passing between the permanent magnets is influenced by the magnetic field lines directly generated between the permanent magnets. A magnetic alignment device with such structure has a structure in which the permanent magnets are fixed and difficult to move or change position, making it difficult to selectively control whether a magnetic field is applied to the electrode sheet.

However, as described above, the present disclosure provides a method in which the magnetic members magnetized by the unit magnets, rather than the unit magnets of each magnetic portion, apply a magnetic field to the electrode sheet, thereby it is possible to selectively control whether a magnetic field is applied to the electrode sheet through the magnetization and demagnetization of the magnetic members.

For this, the first magnetic portion 110a and the second magnetic portion 110b according to the present disclosure may have a structure in which a plurality of unit magnets and a plurality of magnetic members are alternately arranged in the width direction (or y-axis direction) of the electrode current collector C. In this case, the plurality of unit magnets may be arranged so that poles of the same polarity face each other in adjacent unit magnets.

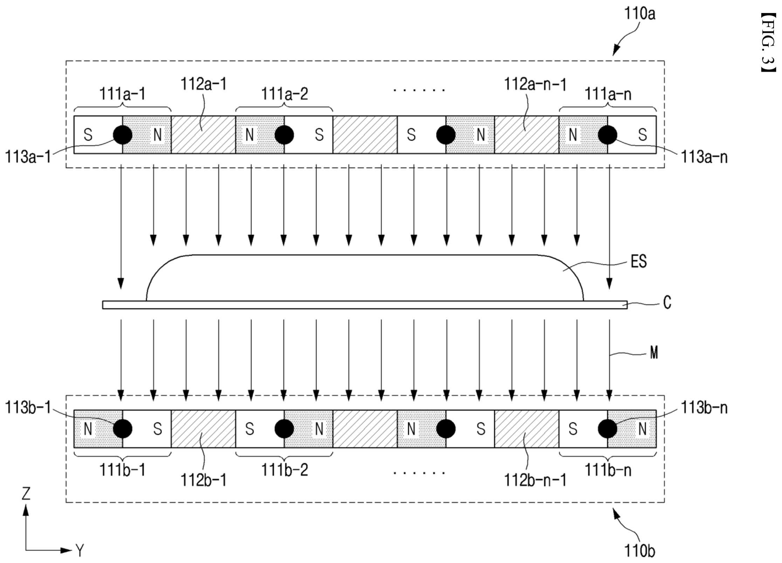

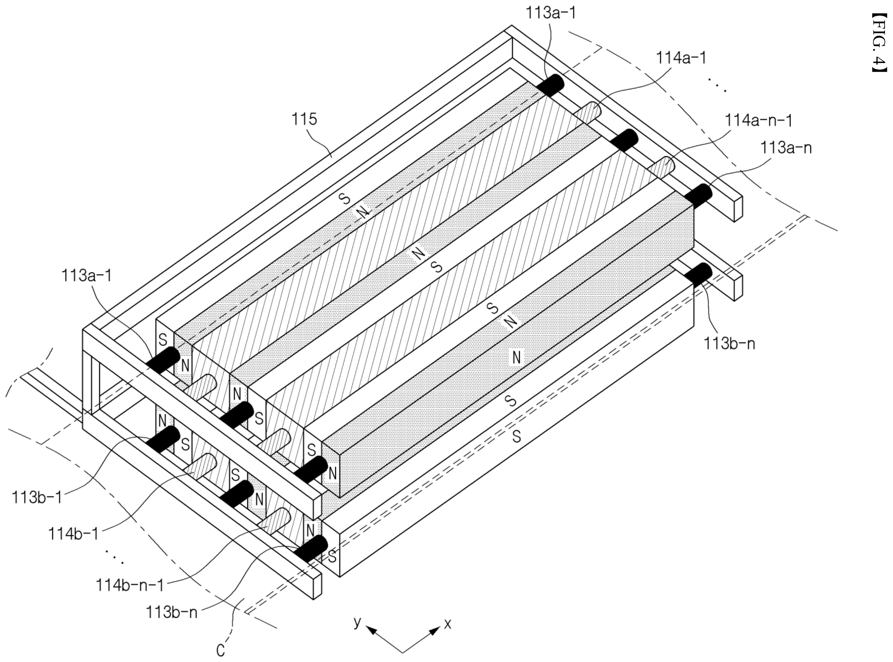

Specifically, as shown in FIGS. 3 and 4, the first magnetic portion 110a and the second magnetic portion 110b may have a structure in which n unit magnets (upper portion: 111a-1 to 11la-n / lower portion: 111b-1 to 111b-n) and n-1 magnetic members (upper portion: 112a-1 to 112a-(n-1) / lower portion: 112b-1 to 112b-(n-1)) are alternately arranged. Here, n is an integer of 2 or more, and specifically, it may be an integer of 2 to 20, 2 to 15, 2 to 10, 2 to 8, or 2 to 5.

In addition, the unit magnets may include both N pole and S pole in one magnet. The first magnetic portion 110a and the second magnetic portion 110b can control the magnetization of the magnetic members in contact with the respective unit magnets and the polarity when magnetized by adjusting the directionality of the magnetic field lines generated by each unit magnet and the type of pole located at the end.

The term "magnetization" refers to the creation or reaction of magnetic moments within a material due to an external magnetic field, causing it to have magnetism. In the present disclosure, it may mean that when a magnetic member is arranged to be in contact between a pair of unit magnets, the magnetic member exhibits magnetic force of the opposite polarity to the polarity of the unit magnets at their boundaries. For example, a magnetic member in contact with the N pole of a pair of unit magnets may exhibit magnetic force of the opposite polarity, the S pole.

In other words, the first magnetic portion 110a and the second magnetic portion 110b according to the present disclosure can alternately arrange n unit magnets, each including both N and S poles in one magnet, with n-1 magnetic members, but when the magnetic field is applied to the magnetic alignment device 10, the N pole and/or S pole of any unit magnet is arranged so that poles of the same polarity face each other in adjacent unit magnets, inducing the magnetic members interposed between them to be magnetized to the opposite polarity of that polarity.

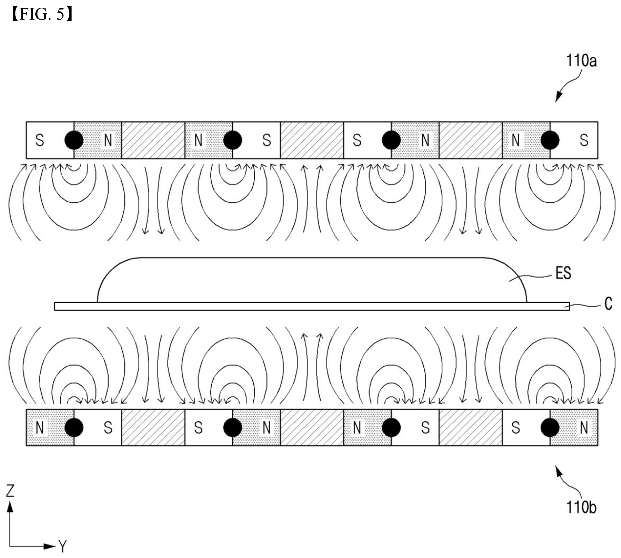

As one example, as shown in FIG. 3 and FIG. 5, the first magnetic portion 110a and the second magnetic portion 110b may have one magnetic portion alternately arranged with four unit magnets and three magnetic members (n=4). At this time, the first magnetic portion 110a may be arranged so that the N pole of the first unit magnet 111a-1 faces the N pole of the second unit magnet 111a-2, and the S pole of the second unit magnet 111a-2 faces the S pole of the third unit magnet 111a-3. In this way, n unit magnets can be arranged along the width direction (y-axis direction) of the electrode current collector so that poles of the same polarity face each other in adjacent unit magnets, and n-1 magnetic members 112a-1 to 112a-(n-1) interposed between them can be magnetized to a polarity different from the polarity of the adjacent unit magnets. For example, the first magnetic member 112a-1 disposed between the N pole of the first unit magnet 111a-1 and the N pole of the second unit magnet 111a-2 can be magnetized to the S pole.

In addition, each unit magnet 111b-1 to 111b-n included in the second magnetic portion 110b may be arranged to have a different polarity from the unit magnet of the first magnetic portion 110a facing in the z-axis direction. For example, the first unit magnet 111b-1 and the second unit magnet 111b-2 of the second magnetic portion 110b may be arranged so that the S poles face each other along the width direction (y-axis direction) of the electrode current collector C.

Therefore, the magnetic members interposed between the adjacent unit magnets of the second magnetic portion 110b can be magnetized to have a different polarity from the magnetic member of the first magnetic portion 110a facing in the z-axis direction, and as a result, a strong magnetic field in the vertical direction based on the surface of each magnetic portion can be generated between the magnetic member of the first magnetic portion 110a and the magnetic member of the second magnetic portion 110b.

In addition, the unit magnets of each magnetic portion can rotate to prevent a magnetic field from being generated between the first magnetic portion 110a and the second magnetic portion 110b when the magnetic field is not applied to the magnetic alignment device 10, which may not induce the magnetization of the magnetic members.

Specifically, the n unit magnets may each include a rotation axis at the boundary between the N pole and the S pole. The rotation axis can rotate the unit magnet that includes the rotation axis to change the direction of the magnetic field lines generated at the poles of the unit magnets. This rotation can be controlled so that the unit magnets included in the first magnetic portion 110a and the second magnetic portion 110b rotate in the same direction and angle at the same time.

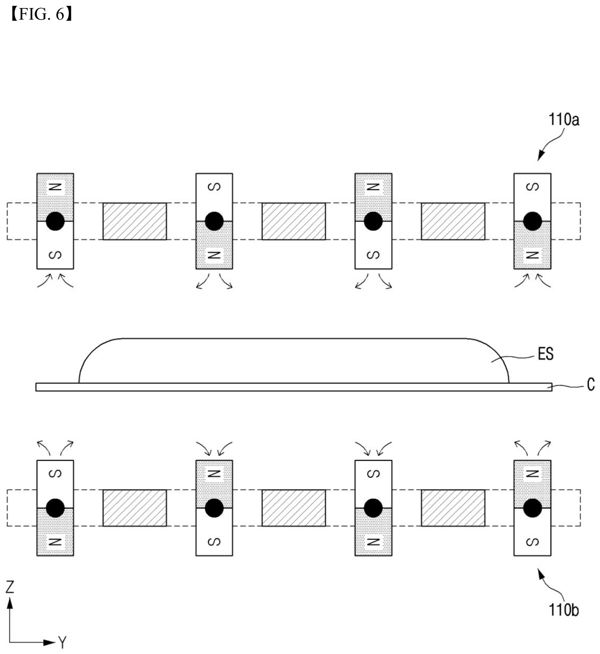

As one example, each unit magnet (upper portion: 111a-1 to 111a-n / lower portion: 111b-1 to 111b-n) included in the first magnetic portion 110a and the second magnetic portion 110b may include a rotation axis (upper portion: 113a-1 to 113a-n / lower portion: 113b-1 to 113b-n) as shown in FIG. 3 and FIG. 6. These rotation axes can all rotate 90° clockwise simultaneously when no magnetic field is applied to the magnetic alignment device 10, arranging the poles of the unit magnets including the rotation axis to face the surface of the electrode current collector (or electrode sheet) C. Due to the rotation of the unit magnets, the direction of the magnetic field lines of the unit magnets moves away from the magnetic members, so the magnetic members can be demagnetized. In addition, the rotated unit magnets of the first magnetic portion 110a and the unit magnets of the second magnetic portion 110b face poles of the same polarity and do not induce magnetic field lines in the vertical direction based on the surface of each magnetic portion. At this time, the influence of the magnetic field lines generated between them is significantly weakened due to the separation distance between the first magnetic portion 110a and the second magnetic portion 110b. Therefore, the electrode current collector (or electrode sheet) being transferred at this time does not have a magnetic field applied to the surface.

Meanwhile, the first magnetic portion 110a and the second magnetic portion 110b may have a structure to facilitate the rotation of the unit magnets included in the respective magnetic portions while fixing the magnetic members included in the respective magnetic portions at a predetermined position.

As an example, the first magnetic portion 110a and the second magnetic portion 110b may include, as shown in FIG. 4, a base frame 115 providing space for n unit magnets and n-1 magnetic members included in each of the first magnetic portion 110a and the second magnetic portion 110b to be positioned at an upper portion and a lower portion the transferred electrode current collector C; a fixing guide (upper portion: 114a-1 to 114a-(n-1) / lower portion: 114b-1 to 114b-(n-1)) supported by the base frame 115 to fix both ends of the n-1 magnetic members; a rotation unit not shown supported by the base frame 115 to rotate the rotation axes (upper portion: 113a-1 to 113a-n / lower portion: 113b-1 to 113b-n) included at both ends of the n unit magnets.

Here, the base frame 115 may have a framework formed to surround the outer sides of the first magnetic portion 110a and the second magnetic portion 110b, thereby providing space for the unit magnets and magnetic members included in each of the first magnet portion 110a and the second magnet portion 110b to be located.

The base frame 115 may be composed of a material that is difficult to be magnetized by the magnetism of the unit magnets in order not to magnetically influence the unit magnets and magnetic members included in each magnetic portion. For example, the base frame 115 may be composed of synthetic resin material or non-magnetic ceramic material.

In addition, a rotation unit connected to the rotation axis of the unit magnet included in each magnetic portion and a fixing guide connected to both ends of each magnetic member along the transfer direction ( or x-axis direction) of the electrode current collector C may be supported on the inside of the base frame 115.

The fixing guide is not particularly limited and can be applied as long as it is a material and shape that can fix the magnetic members of each magnetic portion. For example, the fixing guide may be composed of a synthetic resin material, a non-magnetic ceramic material, or the like, the same as the base frame 115.

In addition, the rotation unit may include a plurality of connecting means in one rotation unit to connect with the rotation axes individually included in a plurality of unit magnets, and in some cases, a plurality of rotation units individually connected to each rotation axis may be provided inside the base frame 115.

The rotation unit is not particularly limited in its form or type as long as it can rotate the rotation axis of the unit magnet. For example, the rotation unit may include an electric motor operated by electric power or a handwheel that can be operated manually by an operator.

In addition, when the rotation unit includes an electric motor, it may be electrically connected to a controller that controls the rotation of the rotation axis of the unit magnet according to whether a magnetic field is applied to the magnetic alignment device 10. At this time, the controller can control the electric motor so that each unit magnet connected to the electric motor can rotate in the same direction and angle at the same time.

Meanwhile, the unit magnet is conventional in the art, and as long as the magnetic forces of the N pole and S pole are evenly divided and a plurality of unit magnets can form one surface when arranged with a plurality of magnetic members, it is not particularly limited and can be applied.

As one example, the unit magnet may have a rectangular parallelepiped rod shape with the magnetic forces of the N pole and S pole evenly divided, as shown in FIG. 4. The magnetic portion including the unit magnet may have one magnet arranged in the longitudinal direction along the transfer direction or x-axis direction of the transferred electrode current collector.

As another example, the unit magnet may have a cube shape with the magnetic forces of the N pole and S pole evenly divided. In this case, the magnetic portion including the unit magnet may be arranged so that a plurality of unit magnets form a line along the transfer direction or x-axis direction of the transferred electrode current collector.

In addition, the unit magnet may include a permanent magnet. The permanent magnet may include both ferromagnetic and soft magnetic magnets including NdFeB-based magnets, SmCo-based magnets, Ferrite magnets, Alnico magnets, FeCrCo-based magnets, and Bond magnets (Nd-Fe-B-based, Sm-Fe-N-based, Sm-Co-based, Ferrite-based), etc.

In addition, the magnetic member is not particularly limited and can be applied as long as it is made of a material that can be magnetized by adjacent unit magnets. Specifically, the magnetic member may be composed of a ferromagnetic material where the magnetic flux density increases when a magnetic field is applied, and which includes one or more of iron, nickel, cobalt, and chromium.

For example, the magnetic member may include a base substrate composed of iron or stainless steel or a rod-shaped base substrate composed of chromium oxide.

The present disclosure can strongly implement the strength of magnetism when a magnetic field is applied by composing the magnetic member of a ferromagnetic material, and when not exposed to a magnetic field due to the rotation of adjacent unit magnets, it can significantly reduce the magnetic field applied to the electrode current collector C being transferred between the first magnetic portion 110a and the second magnetic portion 110b.

The total length of these magnetic members 112a-1 to 112a-n and 112b-1 to 112b-n in the width direction (y-axis direction) of the electrode current collector C may be greater than the width of the electrode slurry ES coated on the electrode current collector C. Specifically, the first magnetic portion 110a and the second magnetic portion 110b may have the same length in the width direction (or y-axis direction) of the electrode current collector. At this time, the total length of the magnetic members included in each magnetic portion may have a length ratio of 101% to 200% of the width of the coated electrode slurry ES.

For example, the total length of the magnetic members included in each magnetic portion may have a length ratio of 101% to 180%; 101% to 160%; 125% to 200%; 150% to 200%; 170% to 200%; 110% to 150%; 110% to 130%; 110% to 120%; 105% to 120%; 130% to 150%; 105% to 120%; or 105% to 110% of the width of the electrode slurry ES.

In this case, the total length of the magnetic members may account for 50% or more of the total length of the magnetic portion including the magnetic members. For example, the total length of the magnetic members may account for 50% to 99%; 60% to 99%; 70% to 99%; 80% to 99%; 90% to 99%; 50% to 90%; 50% to 80%; 50% to 70%; 60% to 95%; 65% to 90%; or 70% to 90% of the total length of the magnetic portion including the magnetic members.

When the total length of the magnetic members has a length ratio equal to or similar to the width of the electrode slurry ES coated on the electrode current collector C, it is difficult to overcome the intermolecular energy difference due to the surface tension of the solvent of the electrode slurry at the edge end of the electrode slurry, making it difficult to align the crystal surface of the electrode active material at a high angle to the electrode current collector C. However, the magnetic alignment device 10 according to the present disclosure satisfies the above-mentioned range for the total length of the magnetic members applying the magnetic field, and thus, it can strongly apply a magnetic field even at the edge end of the electrode slurry, so that the electrode active material may be aligned uniformly with a high degree of alignment regardless of its position.

In addition, the magnetic alignment device 10 according to the present disclosure can control the separation distance between the first magnetic portion 110a and the second magnetic portion 110b and the magnetic force of the unit magnets included in each magnetic portion to a predetermined range to reduce the influence of the magnetic field of the rotated unit magnets when no magnetic field is applied.

For example, the unit magnets included in each magnetic portion may have a magnetic field strength in the range of 2,000G to 8,000G, and specifically, it may have a magnetic field strength in the range of 2,000G to 6,000G; 2,000G to 4,000G; 4,000G to 8,000G; 3,000G to 7,000G; or 4,000G to 6,000G.

In addition, the first magnetic portion 110a and the second magnetic portion 110b may have a separation distance in the range of 10 mm to 1,000 mm in order not to be influenced by the magnetic field strength of the rotated unit magnets when no magnetic field is applied to the magnetic alignment device 10, and specifically, it may have a separation distance in the range of 10 mm to 800mm; 10 mm to 600mm; 10 mm to 500mm; 10 mm to 300mm; 10 mm to 100mm; 100 mm to 900mm; 200 mm to 800mm; 300 mm to 600mm; 400 mm to 700mm; 50 mm to 550mm; 10 mm to 80mm; 10 mm to 60mm; 10 mm to 40mm; 25 mm to 50mm; 40 mm to 90mm; 60 mm to 100mm; or 80 mm to 100mm.

Furthermore, the separation distance may be adjusted so that the magnetic field strength of the magnetic member represented by the following Equation 1 is greater than the magnetic field strength of the unit magnet when a magnetic field is applied to the magnetic alignment device 10:

[Equation 1]

$$y = -a \cdot \ln(x) + b$$

(In Equation 1, x represents the separation distance between the first magnetic portion 110a and the second magnetic portion 110b (unit: mm),

y represents the magnetic field strength of the magnetic member when a magnetic field is applied (unit: G), and a and b satisfy $5600 \leq a \leq 6000$ and $26000 \leq b \leq 30000$).

Specifically, a and b satisfy $5700 \leq a \leq 5950$ and $27500 \leq b \leq 29500$.

For example, the separation distance between the first magnetic portion 110a and the second magnetic portion 110b may be adjusted to 30 mm to 40mm when the magnetic field strength of the unit magnet is 5,000G to 6,000G.

The present disclosure can uniformly apply a magnetic field to the transferred electrode slurry through the magnetic members when a magnetic field is applied to the magnetic alignment device 10 by adjusting the separation distance between the first magnetic portion 110a and the second magnetic portion 110b and the magnetic field strength of the unit magnets to the above-mentioned range, and can minimize the influence of the magnetic field of the unit magnets when no magnetic field is applied to the magnetic alignment device 10.

In addition, in the magnetic alignment device 10, the drying part 120 performs the role of fixing the aligned electrode active materials inside the slurry by drying the electrode slurry ES to which a magnetic field has been applied by the first magnetic portion 110a and the second magnetic portion 110b.

The drying part 120 is formed including a wall (not shown) that blocks the surroundings except for the inlet and outlet through which the electrode sheet with the electrode slurry ES coated enters and exits, and a dryer (not shown) for drying the electrode sheet, which is on the wall on the side where the electrode sheet with the electrode slurry coated is drawn out.

When the electrode sheet C with the electrode slurry ES coated enters through the inlet of the drying part 120, it receives energy such as light, wavelength, heat, etc. supplied from the opposite wall. Therefore, it is preferable that the wall is composed of insulation material to prevent thermal loss caused by the transfer of internal energy to the outside.

In addition, the drying part 120 is not limited in its method, but may have a structure that performs a two-stage drying process to maintain the alignment of the carbon-based negative electrode active material contained in the electrode active layer. Specifically, the drying part 120 may include a first dryer that dries the electrode slurry using light and a second dryer that dries the electrode slurry using heat, and the first dryer and the second dryer may operate continuously to dry the electrode slurry.

The first dryer is a device for pre-drying the electrode slurry, and as described above, it can irradiate light or wavelength onto the surface of the electrode slurry. Generally, when drying the electrode slurry, it is performed by applying hot air at a high temperature, but in this case, it takes a long time to dry the electrode slurry, which can disrupt the alignment of the electrode active materials in the electrode slurry. In addition, if the temperature of the hot air is increased to solve this problem, the tendency to dry at the surface of the slurry increases, causing a migration phenomenon in which the binder is concentrated on the surface of the slurry due to the movement of the solvent, resulting in decreased adhesion strength between the active material layer and the electrode current collector. The present disclosure may have a structure that pre-dries the electrode slurry by irradiating energy in the form of light or wavelength using the first dryer to dry the electrode slurry while maintaining high degree of alignment of the electrode active materials without these problems. Such a first dryer may include, for example, ultraviolet dryers, near-infrared dryers, far-infrared dryers, etc., and specifically, to implement a uniform drying rate of the electrode slurry, it may include a far-infrared dryer that emits energy with a wavelength of 1 $\mu$m or more, more specifically, 5 $\mu$m or more, 10 $\mu$m or more, or 20 $\mu$m or more. Unlike the near-infrared dryers or infrared commonly applied in the art, the far-infrared dryer has longer light or wavelength, so it has good energy efficiency and can apply energy uniformly not only to the surface of the electrode slurry but also to the inside, providing the advantage of increasing the adhesion between the electrode slurry and the electrode current collector in a short time.

At this time, the first dryer may emit energy with an output density of 50kW/$m^2$ to 1,000kW/$m^2$, and specifically, it may emit energy with an output density of 50kW/$m^2$ to 500kW/$m^2$; 50kW/$m^2$ to 250kW/$m^2$; or 50kW/$m^2$ and 200kW/$m^2$. The present disclosure can prevent non-uniform drying of the active material layer due to excessive output density by controlling the output density of the first dryer to the above range.

In addition, the second dryer may apply heat to uniformly and completely dry the electrode slurry that has been pre-dried by light or wavelength. Such a second dryer is not particularly limited and may include anything conventionally applied in the art, but specifically, it may include hot air dryers, vacuum ovens, etc., alone or in combination.

The magnetic alignment device according to the present disclosure, having the above-described configuration, enables magnetic alignment of electrode active material in an electrode to be performed with high efficiency during electrode manufacturing for lithium secondary batteries. Furthermore, the magnetic alignment device has the advantage of excellent workability and high economic efficiency in electrode manufacturing, as the magnetic field application can be easily controlled depending on the magnetization of the magnetic members.

**Method of magnetic alignment of electrode active material in electrode**

In addition, the present disclosure provides a method of magnetic alignment of electrode active material in an electrode comprising:

applying a magnetic field to electrode slurry coated on an electrode current collector using a first magnetic portion and a second magnetic portion positioned at an upper portion and a lower portion, respectively, based on the surface of the electrode current collector,
wherein the first magnetic portion and the second magnetic portion each have a structure in which n unit magnets and n-1 magnetic members are alternately arranged in a width direction of the electrode current collector (where n is an integer from 2 to 20),
wherein each unit magnet has an N pole and an S pole, and is controlled such that poles of the same polarity of adjacent unit magnets face each other when a magnetic field is applied.

The method of magnetic alignment of electrode active material in an electrode according to the present disclosure refers to a method of aligning electrode active materials during electrode manufacturing using the magnetic alignment device of the present disclosure described above.

In other words, the magnetic alignment method includes a step of applying a magnetic field to electrode slurry coated on an electrode current collector. At this time, the magnetic field application is performed by a magnetic alignment device according to the present disclosure having a first magnetic portion and a second magnetic portion positioned at an upper portion and a lower portion, respectively, based on the surface of the electrode current collector.

The first magnetic portion 110a and the second magnetic portion 110b of the magnetic alignment device 10 each have a structure in which n unit magnets and n-1 magnetic members are alternately arranged in the width direction (or y-axis direction) of the electrode current collector (where n is an integer from 2 to 20). Each unit magnet has an N pole and an S pole, and when a magnetic field is applied to the magnetic alignment device, they can be arranged so that poles of the same polarity face each other in adjacent unit magnets.

This arrangement of unit magnets induces the magnetization of the magnetic members placed between the unit magnets, and the magnetic force induced in the magnetic members can have a polarity opposite to that of the adjacent unit magnets. For example, when the N pole of the first unit magnet 111a-1 and the N pole of the second unit magnet 111a-2 are arranged to face each other, the first magnetic member 112a-1 between them can be magnetized to the S pole. In this case, as shown in FIG. 5, since the magnetic field reinforced between the unit magnets acts strongly in the vertical direction based on the surface of each magnetic portion through the magnetic member, a strong magnetic field can be applied to the surface of the electrode current collector being transferred.

In addition, the unit magnet included in each magnetic portion includes a rotation axis at the boundary between the N pole and the S pole, and the rotation axis can rotate the unit magnet to not apply a magnetic field.

Specifically, the unit magnet included in each magnetic portion can have an individual rotation axis. The rotation axis can adjust the position of the pole of the unit magnet so that the magnetic field direction or magnetic field lines of the unit magnet does not influence the magnetic member by rotating the unit magnet. Through this, the magnetization of the magnetic member can be released. In other words, the rotation axis of the unit magnet can stop the application of a magnetic field by the magnetic alignment device by stopping the magnetization of the magnetic member through the change of the magnetic field position of the unit magnet.

Moreover, the magnetic alignment method can control the separation distance between the first magnetic portion 110a and the second magnetic portion 110b and the magnetic field strength of the unit magnets included in each magnetic portion to a predetermined range to reduce the influence of the rotated unit magnets when no magnetic field is applied.

For example, the unit magnets included in each magnetic portion may have a magnetic field strength in the range of 2,000G to 8,000G, and specifically, it may have a magnetic field strength in the range of 2,000G to 6,000G; 2,000G to 4,000G; 4,000G to 8,000G; 3,000G to 7,000G; or 4,000G to 6,000G.

In addition, the first magnetic portion 110a and the second magnetic portion 110b may have a separation distance in the range of 10 mm to 1,000mm in order not to be influenced by the magnetic force of the rotated unit magnets when no magnetic field is applied, and specifically, it may have a separation distance in the range of 10 mm to 800mm; 10 mm to 600mm; 10 mm to 500mm; 10 mm to 300mm; 10 mm to 100mm; 100 mm to 900mm; 200 mm to 800mm; 300 mm to 600mm; 400 mm to 700mm; 50 mm to 550mm; 10 mm to 80mm; 10 mm to 60mm; 10 mm to 40mm; 25 mm to 50mm; 40 mm to 90mm; 60 mm to 100mm; or 80 mm to 100mm.

Furthermore, the separation distance may be adjusted so that the magnetic field strength of the magnetic member represented by the following Equation 1 is greater than the magnetic field strength of the unit magnet when a magnetic field is applied:

[Equation 1]

$$y = -a \cdot \ln(x) + b$$

(In Equation 1,

x represents the separation distance between the first magnetic portion 110a and the second magnetic portion 110b (unit: mm),

y represents the magnetic field strength of the magnetic member when a magnetic field is applied (unit: G), and

a and b satisfy $5600 \leq a \leq 6000$ and $26000 \leq b \leq 30000$.)

Specifically, the a and b satisfy $5700 \leq a \leq 5950$ and $27500 \leq b \leq 29500$.

For example, the separation distance between the first magnetic portion 110a and the second magnetic portion 110b may be adjusted to 30mm to 40mm when the magnetic field strength of the unit magnet is 5,000G to 6,000G.

By adjusting the separation distance between the first magnetic portion 110a and the second magnetic portion 110b and the magnetic field strength of the unit magnets to the above-mentioned range, the present disclosure can uniformly apply a magnetic field to the transferred electrode slurry through the magnetic members when a magnetic field is applied to the magnetic alignment device, and can minimize the influence of the magnetic field of the unit magnets when no magnetic field is applied.

The magnetic alignment method according to the present disclosure has the advantage of not only being able to uniformly apply a magnetic field to the transferred electrode slurry, but also easily adjusting whether a magnetic field is applied due to having the above-mentioned structure. In addition, the magnetic alignment method can selectively apply a magnetic field in predetermined sections along the transfer direction of the electrode current collector during electrode manufacturing, and thus, electrodes of various performances and specifications can be manufactured.

**Electrode sheet for lithium secondary battery**

Moreover, the present disclosure provides an electrode sheet for a lithium secondary battery manufactured by the magnetic alignment method described above.

The electrode sheet for a lithium secondary battery according to the present disclosure refers to an electrode sheet manufactured by the magnetic alignment method described above, which may mean a sheet in a state where an electrode active layer including an electrode active material is provided on an electrode current collector.

At this time, the electrode sheet may be a negative electrode sheet, in which case the negative electrode active layer may include a carbon-based negative electrode active material that is magnetically aligned such that the crystal surface is aligned at a predetermined angle close to vertical based on the surface of the negative electrode current collector.

The electrode sheet may have magnetically aligned electrode active materials distributed over the entire area of the electrode active layer, or in some cases, only over a predetermined area.

Specifically, the electrode sheet includes an electrode active layer including an electrode active material on at least one surface of the electrode current collector. Here, when areas are divided in a certain length ratio along the length direction of the electrode current collector, the electrode active layer may have magnetically aligned electrode active materials alternately distributed in the divided areas.

For example, the electrode active layer may have a form in which a first area including magnetically aligned electrode active materials and a second area including non-aligned electrode active materials are alternately provided.

The length ratio dividing the areas of the electrode active layer may depend on the moving speed of the electrode current collector coated with electrode slurry during electrode manufacturing and the time interval at which the unit magnets included in the first magnetic portion and the second magnetic portion rotate. Specifically, from the time of applying/not applying a magnetic field to the moving electrode slurry according to the present disclosure during electrode manufacturing and the moving speed of the electrode slurry, the length of the first area including aligned electrode active materials and the second area including non-aligned electrode active materials can be adjusted.

The electrode sheet has the advantage of easy control of the properties of the electrode because it can easily adjust the length of the area including aligned electrode active materials and the area including non-aligned electrode active materials.

The type of lithium secondary battery to which this electrode sheet can be applied is not particularly limited. Specifically, the electrode sheet can be applied to pouch or prismatic secondary batteries that can include stack-type, zigzag-type, or zigzag-stack-type electrode assemblies, or cylindrical or prismatic secondary batteries that include wound-type electrode assemblies.

For example, the electrode sheet according to the present disclosure can be applied to a cylindrical secondary battery including a wound electrode sheet in the electrode assembly.

Hereinafter, the present disclosure will be described in more detail through examples and experimental examples.

However, the following examples and experimental examples are merely illustrative of the present disclosure and the content of the present disclosure is not limited to the following examples and experimental examples.

**Example 1. Manufacturing of negative electrode for lithium secondary battery**

Mixed graphite, in which natural graphite and artificial graphite were mixed in a weight ratio of 1:1, was prepared as a carbon-based negative electrode active material. Along with this, styrene-butadiene rubber (SBR) was prepared as a binder, and carboxymethyl cellulose (CMC) was prepared as a thickening agent.

Negative electrode slurry was prepared by mixing 96 wt.% of carbon-based negative electrode active material, 1.5 parts by weight of carboxymethyl cellulose (CMC), and 2.5 wt.% of styrene-butadiene rubber (SBR) with water to become 50% solid content.

When the negative electrode slurry was prepared, the prepared negative electrode slurry ES was inserted into the die coater 30 of the electrode manufacturing device 1 as shown in FIG. 1.

The negative electrode slurry ES inserted into the die coater 30 was coated on a copper foil (thickness: 10 $\mu$m) being transferred by roll-to-roll (transfer speed: 5 m/min) in the transfer part 20, and a magnetic field was applied to the coated negative electrode slurry ES. The magnetic field was applied for 9 seconds to 11 seconds using a magnetic alignment device 10 having the structure shown in FIG. 3 (n=3), and immediately after, the unit magnets of each magnetic portion were rotated so that the magnetic field was not applied for 9 seconds to 11 seconds.

Here, the first magnetic portion 110a and the second magnetic portion 110b equipped in the magnetic alignment device 10 were used with a structure in which three unit magnets and two magnetic members were arranged in the width direction (y-axis direction) of the copper foil.

In addition, the unit magnets of each magnetic portion were arranged so that the polarity at the end was as shown in FIG. 5 when a magnetic field was applied, and when no magnetic field was applied, they were all rotated 90° clockwise by the rotation axis so that the polarity at the end was as shown in FIG. 6. Furthermore, the magnetic members included in each magnetic portion occupied 60% to 70% of the total length of each magnetic portion including the magnetic member in the width direction (y-axis direction) of the copper foil, and were adjusted to a length ratio of 105% to 120% based on the width length of the negative electrode slurry coated on the copper foil.

In addition, for the unit magnets, permanent magnets with a cube shape of 50 mm × 50 mm × 50 mm and a magnetic field strength of 5,500±20 G were used, and these permanent magnets were installed in each magnetic portion in a structure where 5 pieces to 20 pieces were aligned along the transfer direction of the electrode current collector C. The separation distance between the first magnetic portion 110a and the second magnetic portion 110b was adjusted to 60mm to 80 mm.

A negative electrode sheet was obtained in a form where a negative electrode active layer was formed on a negative electrode current collector by hot air drying the negative electrode slurry to which a magnetic field was applied. Then, a negative electrode for a lithium secondary battery (average thickness of negative electrode active layer: 180±5 $\mu$m) was manufactured by rolling the negative electrode active layer at a pressure of 100 MPa to 150 MPa and a transfer speed of 5 m/s at 50±1°C.

**Comparative Example 1. Manufacturing of negative electrode for lithium secondary battery**

A negative electrode for lithium secondary battery was manufactured by performing the same method as in Example 1, except that the structure of the first magnet part 1st MG and the second magnet part 2nd MG of the magnetic alignment device mounted on the electrode manufacturing device is as shown in FIG. 2.

In this case, permanent magnets with a magnetic field strength of 5,500±20 G were applied as the magnets of the first magnet part 1st MG and the second magnet part 2nd MG, and the total length was adjusted to have a length ratio of 105% to 120% based on the width of the negative electrode slurry in the width direction (y-axis direction) of the copper foil.

In addition, the separation distance between the first magnet part 1st MG and the second magnet part 2nd MG was adjusted to 60mm to 80 mm, and the total time for which the magnetic field was applied was 18 seconds to 22 seconds.

**Comparative Example 2. Manufacturing of negative electrode for lithium secondary battery**

A negative electrode for a lithium secondary battery was manufactured by performing the same method as in Example 1, except that the electrode manufacturing device used in Comparative Example 1 was used but the magnetic alignment device was removed from the electrode manufacturing device so that no magnetic field was applied to the negative electrode slurry.

**Experimental Example.**

To evaluate the performance of the magnetic alignment device according to the present disclosure, the orientation index (O.I.) of graphite was measured for each negative electrode manufactured in Example 1 and Comparative Examples 1 and 2.

Specifically, X-ray diffraction spectroscopy (XRD) was performed on the negative electrode active layer for each negative electrode manufactured in Example 1 and Comparative Examples 1 and 2 to measure spectra. At this time, for the negative electrode manufactured in Example 1, X-ray diffraction spectroscopy was measured for the first area where a magnetic field was applied and the second area where no magnetic field was applied, respectively. The measurement conditions for the X-ray diffraction (XRD) were as follows:

- Target: Cu (K$\alpha$ line) graphite monochromator
- Slit: divergence slit = 1 degree, receiving slit = 0.1 mm, scattering slit = 1 degree
- Measurement area: (110) plane: 76.0°<2θ<79.0° / (004) plane: 53.0°<2θ<57.0°.

From the spectra measured under the above conditions, the average orientation index (O.I.) of graphite contained in each negative electrode active layer was calculated using Equation 2. The results are shown in Table 1:

[Equation 2]

$$O.I. = I_{004}/I_{110}$$

In Equation 2,

I$_{004}$ represents the area of the peak representing the (004) crystal surface of the carbon-based negative electrode active material during X-ray diffraction (XRD) spectroscopy analysis of the negative electrode active layer, and

I$_{110}$ represents the area of the peak representing the (110) crystal surface of the carbon-based negative electrode active material during X-ray diffraction (XRD) spectroscopy analysis of the negative electrode active layer.

[Table 1]

|  | O.I. in Magnetic Field Applied Area | O.I. in Magnetic Field Unapplied Area |
|---|---|---|
| Example 1 | 0.5 | 7.8 |
| Comparative Example 1 | 0.7 | Area not included |
| Comparative Example 2 | Area not included | 7.5 |

As shown in Table 1 above, it can be seen that the magnetic alignment device according to the present disclosure allows uniform application of a magnetic field and easy control of whether to apply a magnetic field.

In addition, it can be seen that the electrode manufactured using the magnetic alignment device has high-efficiency magnetic alignment of electrode active materials due to the uniform application of a magnetic field.

Specifically, the negative electrode of Example 1, in which graphite was magnetically aligned using the magnetic alignment device according to the present disclosure, showed an equivalent average orientation index (O.I.) compared to the negative electrode of Comparative Example 1, which used a conventional magnetic alignment device with permanent magnets installed.

In addition, the negative electrode of Example 1, which had no magnetic field applied through the rotation of the unit magnets installed in each magnetic portion, showed a similar average orientation index (O.I.) to the negative electrode of Comparative Example 2, which had no magnetic field applied.

This means that the unit magnets included in each magnetic portion of the magnetic alignment device can induce the magnetization of the magnetic members to indirectly and uniformly apply a magnetic field to the electrode slurry, and by changing the magnetic field direction of the unit magnets, they can avoid applying a magnetic field to the electrode slurry through the demagnetization of the magnetic members.

From these results, it can be seen that the magnetic alignment device according to the present disclosure can perform magnetic alignment of electrode active material in an electrode with high efficiency during electrode manufacturing, and has excellent workability and economic efficiency during electrode manufacturing.

While the present disclosure has been described with reference to exemplary embodiments thereof, it will be understood by those skilled in the art that various modifications and variations can be made therein without departing from the scope of the present disclosure as defined by the appended claims.

Therefore, the scope of the present disclosure should not be limited by the detailed description of the specification but should be determined by the appended claims.

[Description of Reference Numerals]

1: electrode manufacturing device
10: magnetic alignment device
20: transfer part
30: die coater
110: magnetic portion
110a and 110b: a first magnetic portion and a second magnetic portion
111a-1 to 111a-n: unit magnet of a first magnetic portion
112a-1 to 112a-n-1: magnetic member of a first magnetic portion
113a-1 to 113a-n: rotation axis of unit magnet included in a first magnetic portion

111b-1 to 111b-n: unit magnet of a second magnetic portion
112b-1 to 112b-n-1: magnetic member of a second magnetic portion
113b-1 to 113b-n: rotation axis of unit magnet included in a second magnetic portion
114a and 114b: fixing guide
115: base frame
120: drying part
1st MG: a first magnet part
2nd MG: a second magnet part
C: current collector
ES: electrode slurry
M: magnetic field direction
x: transfer direction of electrode current collector
y: direction perpendicular to transfer direction of electrode current collector / width direction of electrode current collector
z: direction perpendicular to surface of electrode current collector

## Claims

1. A magnetic alignment device, comprising:

   a first magnetic portion and a second magnetic portion configured to be positioned at an upper portion and a lower portion, respectively, based on a surface of an electrode current collector coated with electrode slurry along a transfer direction of the electrode current collector to apply a magnetic force,
   wherein the first magnetic portion and the second magnetic portion are configured to each have a structure in which n unit magnets and n-1 magnetic members are alternately arranged in a width direction of the electrode current collector, where n is an integer from 2 to 20,
   wherein each unit magnet has an N pole and an S pole, and is arranged such that poles of the same polarity of adjacent unit magnets face each other when a magnetic field is applied, and
   wherein each magnetic member is configured to be magnetized to a different polarity from the adjacent unit magnets.

2. The magnetic alignment device of claim 1, wherein a magnetic member of the first magnetic portion is configured to be magnetized to a different polarity from a magnetic member of the second magnetic portion when a magnetic field is applied.

3. The magnetic alignment device of claim 1, wherein each of the n unit magnets includes a rotation axis at a boundary between the N pole and the S pole, and each rotation axis is configured to rotate in the same direction such that the N pole or the S pole of each of the unit magnet faces the electrode current collector when no magnetic field is applied.

4. The magnetic alignment device of claim 3, wherein the first magnetic portion and the second magnetic portion includes:

   a base frame providing space for the n unit magnets and n-1 magnetic members included in each magnetic portion to be positioned at an upper portion and a lower portion of the transferred electrode current collector;
   a fixing guide supported by the base frame to fix the n-1 magnetic members, and
   a rotation unit supported by the base frame to rotate rotation axes included in the n unit magnets.

5. The magnetic alignment device of claim 1, wherein the magnetic member has a total length in the width direction of the electrode current collector in a ratio in the range of 101% to 200% of a width of the electrode slurry.

6. The magnetic alignment device of claim 1, wherein the first magnetic portion and the second magnetic portion have a separation distance in the range of from 10 mm to 1,000 mm.

7. The magnetic alignment device of claim 1, wherein the unit magnet exhibits a magnetic field strength in the range of 2,000G to 8,000G.

8. The magnetic alignment device of claim 1, wherein the unit magnet comprises a permanent magnet.

9. The magnetic alignment device of claim 1, wherein the magnetic member includes a ferromagnetic material including one or more of iron, nickel, cobalt, or chromium.

10. A method of magnetic alignment of electrode active material in an electrode, comprising:

applying a magnetic field to electrode slurry coated on an electrode current collector using a first magnetic portion and a second magnetic portion positioned at an upper portion and a lower portion, respectively, based on a surface of the electrode current collector,

wherein the first magnetic portion and the second magnetic portion each have a structure in which n unit magnets and n-1 magnetic members are alternately arranged in a width direction of the electrode current collector, where n is an integer from 2 to 20, and

wherein each unit magnet has an N pole and an S pole, and is arranged such that poles of the same polarity of adjacent unit magnets face each other when a magnetic field is applied.

11. The method of magnetic alignment of claim 10, wherein the magnetic member of the first magnetic portion is magnetized to a different polarity from the magnetic member of the opposing second magnetic portion when a magnetic field is applied.

12. The method of magnetic alignment of claim 10, wherein each of the n unit magnets includes a rotation axis at a boundary between the N pole and the S pole, and rotates in the same direction such that the N pole or the S pole of the unit magnet faces the electrode current collector when no magnetic field is applied.

13. The method of magnetic alignment of claim 10, wherein the first magnetic portion and the second magnetic portion are separated such that a magnetic field strength of the magnetic member represented by the following Equation 1 is greater than a magnetic field strength of the unit magnet when a magnetic field is applied:

[Equation 1]

$$y=-a\cdot\ln(x)+b$$

In Equation 1, x represents a separation distance between the first magnetic portion and the second magnetic portion, unit: mm;

y represents the magnetic field strength of the magnetic member when a magnetic field is applied, unit: G; and

a and b satisfy $5600 \leq a \leq 6000$ and $26000 \leq b \leq 30000$.

【FIG. 1】

【FIG. 2】

【FIG. 3】

【FIG. 4】

【FIG. 5】

【FIG. 6】

# INTERNATIONAL SEARCH REPORT

| International application No. |
| --- |
| **PCT/KR2024/020933** |

| A. | CLASSIFICATION OF SUBJECT MATTER |
| --- | --- |

**H01M 4/04**(2006.01)i; **H01F 7/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/04(2006.01); F16H 7/06(2006.01); G11B 5/845(2006.01); H01F 7/02(2006.01); H01M 10/052(2010.01); H01M 10/058(2010.01); H01M 4/133(2010.01); H01M 4/1393(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 자성(magnetism), 정렬(alignment), 전극(electrode), 활물질(active material), 슬러리(slurry), 집전체(current collector), 자화(magnetization), 교대(alternation), 극성(polarity), 회전(rotation)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2617498 B1 (LG ENERGY SOLUTION, LTD.) 27 December 2023 (2023-12-27)<br>See claims 4, 5 and 11; paragraph [0110]; and figures 1 and 2. | 1-13 |
| A | KR 10-2015-0136319 A (LG CHEM, LTD.) 07 December 2015 (2015-12-07)<br>See claims 1, 2 and 7-8; and figures 1-4. | 1-13 |
| DA | KR 10-2019-0049803 A (BATTRION AG) 09 May 2019 (2019-05-09)<br>See claims 1-3 and 22; paragraphs [0050] and [0051]; and figures 1, 2 and 7. | 1-13 |
| A | KR 10-2023-0011694 A (C&C ENG CO., LTD.) 25 January 2023 (2023-01-25)<br>See claims 1 and 2; and figures 1-3. | 1-13 |
| A | JP 2000-057568 A (FUJI PHOTO FILM CO., LTD.) 25 February 2000 (2000-02-25)<br>See claim 1; paragraphs [0015]-[0018]; and figures 1 and 2. | 1-13 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **31 March 2025** | **31 March 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/020933**

| Patent document cited in search report | | | Publication date (day/month/year) | Patent family member(s) | | | Publication date (day/month/year) |
|---|---|---|---|---|---|---|---|
| KR | 10-2617498 | B1 | 27 December 2023 | CN | 118369786 | A | 19 July 2024 |
| | | | | EP | 4421900 | A1 | 28 August 2024 |
| | | | | JP | 2024-545453 | A | 06 December 2024 |
| | | | | US | 2024-0429366 | A1 | 26 December 2024 |
| | | | | WO | 2024-080617 | A1 | 18 April 2024 |
| KR | 10-2015-0136319 | A | 07 December 2015 | KR | 10-1795117 | B1 | 07 November 2017 |
| KR | 10-2019-0049803 | A | 09 May 2019 | CH | 712877 | A2 | 15 March 2018 |
| | | | | CH | 712912 | A2 | 15 March 2018 |
| | | | | CN | 109690840 | A | 26 April 2019 |
| | | | | CN | 109690840 | B | 05 March 2024 |
| | | | | EP | 3510658 | A1 | 17 July 2019 |
| | | | | JP | 2019-534155 | A | 28 November 2019 |
| | | | | JP | 7237363 | B2 | 13 March 2023 |
| | | | | US | 11189824 | B2 | 30 November 2021 |
| | | | | US | 2019-0190010 | A1 | 20 June 2019 |
| | | | | WO | 2018-047054 | A1 | 15 March 2018 |
| KR | 10-2023-0011694 | A | 25 January 2023 | KR | 10-2499063 | B1 | 14 February 2023 |
| JP | 2000-057568 | A | 25 February 2000 | JP | 3625137 | B2 | 02 March 2005 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230196666
- KR 1020190049803